# EUROPEAN PATENT APPLICATION

(11) **EP 1 770 079 A1**
(43) Date of publication of application: **04.04.2007**
(21) Application number: 05460028.3
(22) Date of filing: 03.10.2005
(51) Int. Cl.: C05B 21/00, C05B 19/02, C05G 1/00

(54) **Method of NPK and PK fertilizers production**

(71) Applicant: Zaklady Chemiczne "POLICE" S.A., 72-010 Police (PL)
(72) Inventor: Wysocki, Andrzej, 72-010 Police (PL); Gabyel, Henryk, 71-774 Szczecin (PL); Kunstman, Micha, 72-010 Police (PL); Kuropatnicki, Jerzy, 72-010 Police (PL); Pleskacz, Robert, 72-010 Police (PL); Króiak, Wojciech, 72-010 Police (PL); Tomaszewski, Zbigniew, 71-113 Szczecin (PL); Juzak, Stanislaw, 72-010 Police (PL); Zwolinska, Maria, 71-400 Szczecin (PL); Zienkiewicz, Monica, 70-615 Szczecin (PL)
(74) Representative: Taterka, Ireneusz

(57) **Abstract**

The subject of the invention is method of NPK and PK fertilizers production by feeding to the granulation process superphosphate slurry, so-called MSP slurry, together with MAP slurry or instead of MAP slurry, in amount to 100% by weight of P₂O₅ contained in fertilizer. Total participation of MAP and MSP slurry amounts from 5 to 80 % by weight of fertilizer. MSP slurry is a suspension containing mixture of mono- and dicalcium phosphates and calcium sulphate in saturated solution by above salts above mentioned and free phosphoric acid. MSP superphosphate slurry is obtained in the reaction between phosphate rock and mixture of phosphoric and sulfuric acids in mutual ratio: from 40 to 63% by weight of phosphate rock, from 37 to 60% by weight of mixture of phosphoric and sulfuric acids. The amounts of the acids are given as 100-percent acids.

## Description

The subject of the invention is method of NPK and PK fertilizer production. There are well-known methods of complex fertilizers production on basis of Dorr-Oliver process, described as "wet method" where the mixture of phosphoric acid and sulfuric acid is neutralized with ammonia to obtain ammonium phosphate and ammonium sulphate slurry. Produced mixture is intensively heated and mixed.
Obtained at this way slurry, so-called MAP (monoammonium phosphate) is directed to the granulator, where is mixed with solid raw materials and recycled fine fertilizer material. Moist fertilizer mass from the granulator is directed to the drying, separating and conditioning stages. Separated product size fraction of granules after conditioning is finished product sent to storage.

The disadvantage of presented method is necessity of using additional raw materials, like active and neutral fillers in the case of fertilizers production with total N,P,K nutrient contents below 55% by weight, where nitrogen is expressed in % by weight of N, phosphorus in % by weight P₂O₅ and potassium in % by weight K₂O. Furthermore this technology doesn't give possibility to produce fertilizer with low concentration of nitrogen (less than 4% by weight of N). Low-concentrated fertilizers produced in standard technology by admixture raw materials and fillers such as; superphosphate, magnezite, dolomite, calcium carbonate, etc. have relatively less crushing strength and consequentially have tendence to caking during storage and handling. Moreover introducing mentioned admixtures raises production costs.

Purpose of the invention is method of NPK and PK fertilizers production, which eliminate disadvantages occurred in process used up to the present.

Method of NPK and PK fertilizers production according to the invention is characterized in that to the granulation stage is fed superphosphate slurry, so-called MSP slurry, together with MAP slurry or instead of MAP slurry, in amount to 100% by weight of P₂O₅ contained in fertilizer. MSP slurry is a suspension comprising mixture of mono- and dicalcium phosphates and calcium sulphate in saturated solution by mentioned above salts as well as free phosphoric acid. Total MAP and MSP slurry participation composes from 5 to 80 % by weight of fertilizer. MSP superphosphate slurry is obtained by acidulation phosphate rock with mixture of phosphoric acid and sulfuric acid in mutual ratio: from 40 to 63% by weight of phosphate rock, and from 37 to 60% by weight of mixture of phosphoric and sulfuric acids (calculated as acids with 100% concentration). Total P₂O₅ in MSP slurry is from 17 to 50% by weight as dry matter, and free acids content reaches to 20% by weight as P₂O₅.

Method according to the invention allows to produce cheaper fertilizers with lower than 55% NPK nutrients contents, without using additional raw materials like active or neutral fillers having negative influence on storage-transportation properties of the finished product. It's also possible to produce low-nitrogen fertilizers containing less than 4% by weight of nitrogen.

### Example I:

Method of granulated nitrogen-free fertilizer production, type PK 15-24 using superphosphate MSP slurry comprising 36% by weight of P₂O₅ as dry matter. To produce superphosphate MSP slurry, raw materials are fed continuously into the reactor equipped with agitator, introducing following amounts per 1 tonne of slurry: 0.325 t of phosphoric acid 42% by weight of P₂O₅ calculated as 100-percent acid, 0.192 t of sulphuric acid 94% by weight of H₂SO₄ calculated as 100-percent acid, 0.500 t Tunisian phosphate rock (29.4 % P₂O₅) and 0.27 m³ of water to adjust fluidity of slurry. Likely foam formation of slurry as an effect of chemical reactions between ingredients of phosphate rock and mixture of phosphoric and sulfuric acids is eliminated by adding antifoaming agent - natrium sulphosuccinate salt of dioctyl (SBO) with amount 2.2 kg/t of slurry as dry matter. The temperature of the chemical reactions is within the range 85 - 95°C.

Produced slurry is directed through the pipe system to the granulator, where is mixed with stream of recycled fine fertilizer and solid raw material. To produce PK 15-24 fertilizer, following raw materials are used per tonne of fertilizer: 0.420 t of MSP slurry as dry matter, 0.400 t of potassium salt (KC1), 0.155 t of magnezite, 0.040 t of calcium carbonate. Mass of moist fertilizer with content 10 % by weight of water is directed to the dryer to dry formed fertilizer granules. Temperature of air in inlet to dryer should achieve moisture content in finished product not more than 5 % by weight of H₂O. The temperature dried fertilizer should be about 80°C. Hot fertilizer from the dryer is directed to the screening system, where oversize grains (>5 mm) and undersize grains (< 2 mm) are separated from the product grains size (2-5 mm). Part of product grains size with selected undersize grains and crushed oversize grains is recycled in the system, to form a material matrix initiating granulation germs. Mass of recycled material and mass of finished product (equivalent with mass of raw materials) are combined in a ratio within the range 7 : 1 by weight. Remaining part of product grains size after conditioning operations like cooling presents a commercial product.

### Example II:

Method of granulated low-nitrogen fertilizer production, type NPK 3-12-18 using superphosphate MSP slurry comprising 30% by weight of P₂O₅ as dry matter. To produce superphosphate MSP slurry, the following amounts raw materials are continuously fed to equipped with agitator reactor per 1 tonne of slurry: 0.220 t of phosphoric acid 42% by weight of P₂O₅ as 100-percent acid, 0.276 t of sulphuric acid 94% by weight of H₂SO₄ t as 100-percent acid, 0.496 t Tunisian phosphate rock 29.4 % of P₂O₅ content and 0.29 m³ of water to adjust slurry flowing. Likely foam formation of slurry as an effect of chemical reactions between ingredients of phosphate rock and mixture of phosphoric and sulfuric acids is eliminated by adding antifoaming agent - natrium sulphosuccinate salt of dioctyl (SBO) with amount 2.8 kg/t of slurry as dry matter. The temperature of the chemical reactions is within the range 85 - 95°C. Produced slurry is directed through the pipe system to the granulator, where is connected with stream of recycled fertilizer and solid raw material.

To produce NPK 13-12-18 fertilizer following amounts raw materials are used per tonne of fertilizer: 0.019 t of gaseous ammonia, 0.072 t of solid ammonium sulphate, 0.404 t of MSP slurry as dry matter, 0.298 t of potassium salt (KCl), 0.200 t of magnezite. Gaseous ammonia is fed into the moist mass of granulation bed to adjust consistency of granulated mass and also to obtain 1.5 % by weight of nitrogen. Rest of needed nitrogen (1.5 % by weight) is obtained by adding solid ammonium sulphate, contained minimum 20% by weight of nitrogen.

Mass of moist fertilizer with content 10 % by weight of water is directed to the dryer to dry granules. The temperature of the inlet air to dryer should provide moisture of finished product not more than 3 % by weight of H₂O. The temperature of dried fertilizer should be about 80°C. Hot fertilizer from the dryer is directed to the screening system, where oversize grains (>5 mm) and undersize grains (< 2 mm) are separated from the product grains size (2-5 mm). Part of product grains size with selected undersize grains and crushed oversize grains is recycled in the system, to form a material matrix initiating granulation germs. Mass of recycled material and mass of finished product (equivalent with mass of raw materials) are combined in a ratio within the range 7 : 1 by weight. Remaining part of product grains size after conditioning operations and covering by anticaking agent presents a commercial product.

### Example III.

Method of granulated fertilizer production, NPK 4-12-32 using mixture of slurries:
MAP slurry - ammonium phosphates and ammonium sulphates with superphosphate MSP slurry with content 36% by weight of P₂O₅ as dry matter.

To produce superphosphate MSP slurry following amounts of raw materials per 1 tonne of slurry are fed continuosly into the reactor equipped with agitator: 0.325 t of phosphoric acid 42% by weight of P₂O₅ content as 100-percent acid, 0.192 t of sulphuric acid 94% by weight of H₂SO₄ content as 100-percent acid, 0.500 t Tunisian phosphate rock 29.4 % of P₂O₅ content and 0.27 m³ of water to adjust slurry flowing. Likely foam formation of slurry as an effect of chemical reactions between ingredients of phosphate rock and mixture of phosphoric and sulfuric acids is eliminated by adding antifoaming agent - natrium sulphosuccinate salt of dioctyl (SBO) with amount 2.2 kg/t of slurry as dry matter. The temperature of the chemical reactions is within the range 85 - 95°C.

Ammonium phosphates and ammonium sulphates slurry (MAP slurry) is prepared in the reactor equipped with agitator by adding reagents with the following amounts per 1 tonne of fertilizer: 0.050 t of gaseous ammonia, 0.120 t of phosphoric acid 42% by weight of P₂O₅ content as 100-percent acid, 0.085 t sulphuric acid 94% by weight of H₂SO₄ content as 100-percent acid, 0.2 m³ waste water from gas and dust absorption system. Chemical reactions in the reactor are exotermic, the temperature of the forming MAP slurry process is within the range 105 - 115°C, and this allows to avoid slurry thickeness. Prepared in above methods MAP and MSP slurries are directed by two streams to the granulator where are connected with stream of recycled fine fertilizer and solid raw material.

To produce NPK 4-12-32 fertilizer are used following amounts of raw materials per tonne of fertilizer: 0.240 t of MAP slurry as dry matter, 0.132 t of MSP slurry as dry matter, 0.530 t of potassium salt (KCl), 0.100 t of magnezite.

Mass of moist fertilizer with content 10 % by weight of water is directed to the dryer for drying granulate. The temperature of the inlet air dryer should provide moisture of finished product no more than 2 % by weight of H₂O. The temperature of the outlet air and dried fertilizer should not exceed 80°C. Hot fertilizer from the dryer is directed to the screening system, where oversize grains (>5 mm) and undersize grains (< 2 mm) are separated from the product grains size (2-5 mm). Part of product grains size with selected undersize grains and crushed oversize grains is recycled in the system, to form a material matrix initiating granulation germs.

Mass of recycled material and mass of finished product (equivalent with mass of raw materials) are combined in a ratio within the range 7 : 1 by weight. Remaining part of product grains size after conditioning operations and covering by anticaking agent presents a commercial product. Remaining part of product grains size after conditioning operations and covering by anticaking agent presents a commercial

## Claims

1. Method of NPK and PK fertilizers production is **characterized in that** to the granulation process is fed superphosphate slurry, so-called MSP slurry together with MAP slurry or instead of MAP slurry, in amount to 100% by weight of P₂O₅ contained in fertilizer.

2. Method according to claim 1 is **characterized in that** total participation of MAP and MSP slurry amounts from 5 to 80 % by weight of raw materials.

3. Method according to claim 1 is **characterized in that** MSP slurry is a suspension containing mixture of mono- and dicalcium phosphates and calcium sulphate in saturated solution by mentioned above salts and free phosphoric acid.

4. Method according to claim 1 is **characterized in that** MSP superphosphate slurry is obtained in the reaction between phosphate rock and mixture of phosphoric and sulfuric acids in mutual ratio: from 40 to 63% by weight of phosphate rock, from 37 to 60% by weight of mixture of phosphoric and sulfuric acids. The amounts of the acids are given as 100-percent acids.

5. Method according to claim 1 is **characterized in that** MSP slurry total P₂O₅ content is from 17 to 50% by weight as dry matter, including to 20 % of free acids calculated by weight as P₂O₅.
